(19) **Europäisches Patentamt**
**European Patent Office**
**Office européen des brevets**

(11) **EP 4 604 064 A1**

(12) **EUROPEAN PATENT APPLICATION**
published in accordance with Art. 153(4) EPC

(43) Date of publication:
**20.08.2025 Bulletin 2025/34**

(21) Application number: **23876498.9**

(22) Date of filing: **21.09.2023**

(51) International Patent Classification (IPC):
*G06T 11/20* (2006.01)    *G06F 3/16* (2006.01)

(86) International application number:
**PCT/CN2023/120412**

(87) International publication number:
**WO 2024/078293 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022   CN 202211262215**

(71) Applicant: **Beijing Zitiao Network Technology Co., Ltd.**
**Beijing 100190 (CN)**

(72) Inventors:
• **WANG, Shengnan**
**Beijing 100028 (CN)**
• **PENG, Wei**
**Beijing 100028 (CN)**

(74) Representative: **Marks & Clerk LLP**
**15 Fetter Lane**
**London EC4A 1BW (GB)**

(54) **IMAGE PROCESSING METHOD AND APPARATUS, ELECTRONIC DEVICE, AND STORAGE MEDIUM**

(57)    The embodiments of the disclosure provides a method for image processing and an apparatus, an electronic device, a computer readable storage medium, a computer program product and a computer program, and the method includes: generating, during playing audio data, a target facial patch corresponding to a target audio frame, wherein the target facial patch is used to represent a target mouth shape, and the target mouth shape corresponds to audio content of the target audio frame; and displaying the target facial patch in a first facial area of a target image, wherein the first facial area is used to present a change of a mouth shape as the audio data is played. The target facial patch is used to simulate and display the target mouth shape corresponding to the currently played target audio content, so that the mouth shape displayed in the facial area of the target image may change with the change of the audio content, which may imitate the audio process corresponding to the audio data of a real people singing, so that the audio works may present the display effect of video works, and improve the richness and diversity of the display content of audio works.

FIG. 2

**Description**

**CROSS-REFERENCING OF RELATED APPLICATIONS**

This application claims priority to Chinese Patent Application No. 202211262215.1, filed on October 14, 2022, entitled "Method For Image Processing, Apparatus, Electronic Device, and Storage Medium," which is incorporated herein by reference in its entirety.

**FIELD**

Embodiments of the present disclosure relate to the field of Internet technologies, and in particular, to a method for image processing and an apparatus, an electronic device, a computer-readable storage medium, a computer program product, and a computer program.

**BACKGROUND**

Currently, content creation platforms, such as short video applications, are deeply loved by users for their rich and diversified content. For example, after a content creator generates an audio work by recording the audio and uploads the audio work to an application platform, other users may listen to the audio work through a corresponding application client.
However, in the prior art, the presenting process of audio works usually only present a static picture in a playback interface of the client while playing the audio work, which leads the problem of single presenting mode and poor presenting effect.

**SUMMARY**

The embodiment of the disclosure provides a method for image processing and an apparatus, an electronic device, a computer-readable storage medium, a computer program product and a computer program, so that the problem that when playing an audio work, the present mode of the present content is single, and the present effect is poor is solved.
According to a first aspect, an embodiment of the present disclosure provides a method for image processing, including:
generating, during playing audio data, a target facial patch corresponding to a target audio frame, where the target facial patch is used to represent a target mouth shape, and the target mouth shape corresponds to audio content of the target audio frame; and displaying the target facial patch in a first facial area of a target image, and the first facial area is used to present a change of a mouth shape as the audio data is played.
According to a second aspect, an embodiment of the present disclosure provides an apparatus for image processing, including:

a processing module, configured to generate, during playing audio data, a target facial patch corresponding to a target audio frame, where the target facial patch is used to represent a target mouth shape, and the target mouth shape corresponds to audio content of the target audio frame; and
a display module, configured to display the target facial patch in a first facial area of a target image, where the first facial area is used to present a change of a mouth shape as the audio data is played.

According to a third aspect, an embodiment of the present disclosure provides an electronic device, including:

a processor, and a memory communicatively connected to the processor,
the memory storing computer executable instructions,
the processor executes the computer executable instruction stored in the memory to implement the method for image processing according to the first aspect and various possible designs of the first aspect.

According to a fourth aspect, an embodiment of the present disclosure provides a computer-readable storage medium, where the computer-readable storage medium stores computer-executable instructions, and when the processor executes the computer-executable instruction, the method for image processing according to the first aspect and the possible designs of the first aspect is implemented.
According to a fifth aspect, an embodiment of the present disclosure provides a computer program product, including a computer program, where the computer program, when executed by a processor, implements the method for image processing according to the first aspect and various possible designs of the first aspect.
According to a sixth aspect, an embodiment of the present disclosure provides a computer program, where the computer program, when executed by a processor, implements the method for image processing according to the first aspect and various possible designs of the first aspect.

## BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative efforts.

FIG. 1 is an application scenario diagram of a method for image processing according to an embodiment of the present disclosure.
FIG. 2 is a first schematic flowchart of a method for image processing according to an embodiment of the present disclosure.
FIG. 3 is a schematic diagram of a corresponding relationship between an audio frame and audio content according to an embodiment of the present disclosure.
FIG. 4 is a schematic diagram of a target facial patch according to an embodiment of the present disclosure.
FIG. 5 is a flowchart of a possible specific implementation process of step S101 in the embodiment shown in FIG. 2.
FIG. 6 is a schematic diagram of a process of displaying a target facial patch according to an embodiment of the present disclosure.
FIG. 7 is a schematic diagram of a process of alternately magnifying and displaying a target image according to an embodiment of the present disclosure.
FIG. 8 is a second schematic flowchart of a method for image processing according to an embodiment of the present disclosure.
FIG. 9 is a schematic diagram of a corresponding relationship between an uttering stage and first mouth shape data according to an embodiment of the present disclosure.
FIG. 10 is a schematic diagram of contour key points according to an embodiment of the present disclosure.
FIG. 11 is a flowchart of a possible specific implementation process of step S205 in the embodiment shown in FIG. 8.
FIG. 12 is a structural block diagram of an apparatus for image processing according to an embodiment of the present disclosure.
FIG. 13 is a schematic structural diagram of an electronic device according to an embodiment of the present disclosure.
FIG. 14 is a schematic diagram of a hardware structure of an electronic device according to an embodiment of the present disclosure.

## DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

The following describes an application scenario of an embodiment of the present disclosure.

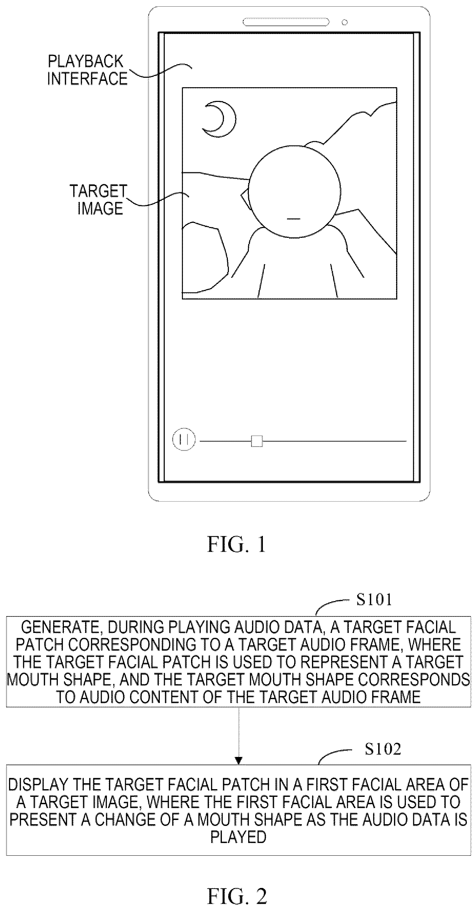

FIG. 1 is an application scenario diagram of a method for image processing according to an embodiment of the present disclosure. The method for image processing provided by embodiments of the present disclosure may be applied to the scenarios of audio/video production and audio/video playback. More specifically, for example, during playing an audio/video in a short video platform, an application scenario of a visual effect of "lip syncing" is implemented by triggering a platform prop (that is, a function control). As shown in FIG. 1, the method provided in embodiments of the present disclosure may be applied to a terminal device, in which an application client configured to play video or audio runs. The terminal device obtains corresponding media data by communicating with the server and plays the media data, where exemplarily, the media data is, for example, audio data or video data including audio data. While playing the audio data, the client running in the terminal device presents a static target image in the playing interface of the client, where the audio data is, for example, data corresponding to a song, and the terminal device presents a photo of the singer of the song in the playing interface while playing the audio data.

In the prior art, during playing an audio work, the client usually only presents a static cover image (a target image), such as a singer photo, in the playback interface of the client. Due to the lack of video data, there lies a problem of single presentation and poor presentation effect compared with presenting video works. Embodiments of the present disclosure provide a method for image processing, and during playing audio data, a dynamic facial patch is generated to simulate a singer's singing/speaking process to the audio, thereby achieving the effect of presenting videos to solve the foregoing problem.

Referring to FIG. 2, which is a first schematic flowchart of a method for image processing according to an embodiment of the present disclosure. The method of this embodiment may be applied to a terminal device, and the method for image processing includes:

Step S101: during playing audio data, generating a target facial patch corresponding to a target audio frame, where the target facial patch is used to represent a target mouth shape, and the target mouth shape corresponds to audio content of the target audio frame.

For example, the execution body of the method provided in this embodiment may be a terminal device, where an application client for playing video and audio runs in the terminal device. Specifically, the client may, for example, be a short video client or a music client, and the client in the terminal device may obtains media data to be played by communicating with a server. In a possible implementation, the media data includes video data and audio data. After the terminal device parses the media data based on the video channel and the audio channel, the data corresponding to the video channel and data corresponding to the audio channel, that is, the video data and the corresponding audio data may be obtained. In another possible implementation, the media data is audio data, and the terminal device directly obtains the audio data by accessing the server. Further, the audio data is, for example, data corresponding to content such as song music and voice.

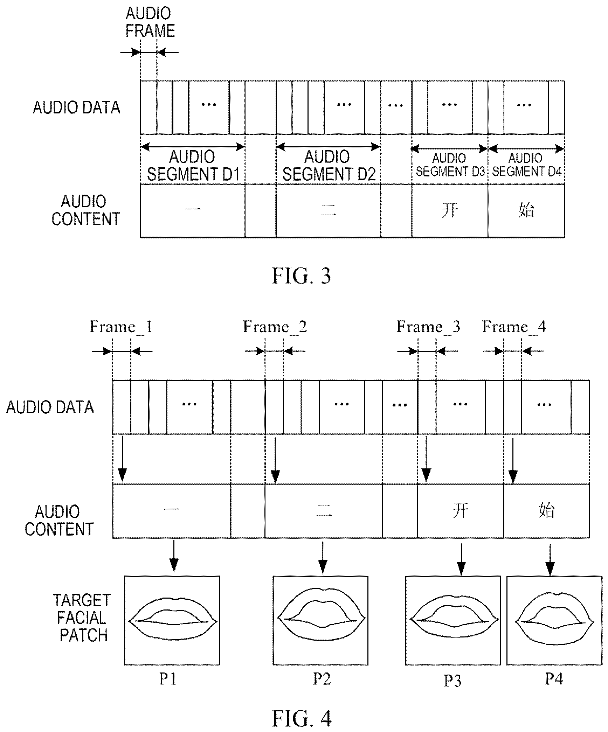

For example, after obtaining the audio data, the terminal device plays the audio data, where the audio data includes at least one audio segment, and each audio segment includes a plurality of audio frames. When the playback duration of the audio data is fixed, the number (and duration) of the audio frames is determined by the frame rate of the audio data. The specific corresponding relationship is the prior art, and details will not be described here. Further, if the audio data, for example, corresponds to a part of a song or a part of a speech, each audio frame in the audio data corresponds to an utteration segment in the song or speech. An audio segment composed of multiple audio frames may implement the complete utteration of a text, number, letter, word or a beat, and the text, number, letter, word and beat are the audio content. FIG. 3 is a schematic diagram of a corresponding relationship between an audio frame and audio content according to an embodiment of the present disclosure. As shown in FIG. 3, the audio data corresponds to a voice, and the audio content (i.e., the voice content) is "一、二、开始!", where each text corresponds to an audio segment. For example, the word "一" corresponds to the audio segment D1; the word "二" corresponds to the audio segment D2; the word "开" corresponds to the audio segment D3; the word "始" corresponds to the audio segment D4. Furthermore, each audio segment includes a different number of audio frames, for example, the audio segment D1 includes n1 audio frames, the audio segment D2 includes n2 audio frames, the audio segment D3 includes n3 audio frames, and the audio segment D4 includes n4 audio frames. That is, the audio content corresponding to respective audio frames in the audio segment D1 is "一", the audio content corresponding to respective audio frames in the audio segment D2 is "二", the audio content corresponding to respective audio frames in the audio segment D3 is "开 ", and the audio content corresponding to respective audio frames in the audio segment D4 is "始".

In another possible case, the audio content may also be a word, a letter constituting a word, and the like. In this case, each word or the letter constituting the word corresponds to an audio segment, and each audio segment is composed of a plurality of audio frames. The specific implementation is similar to the above embodiment, and the specific implementation may be configured as needed, which will not be described here.

Further, for each audio segment, at least one target audio frame is included. More specifically, for example, the first frame of each audio segment is a target audio frame. During playing audio data, when the target audio frame is played, a patch, i.e., a target facial patch corresponding to the target audio frame is generated, which may present the mouth shape of a real person when uttering the audio content corresponding to the target audio frame. Figure 4 is a schematic diagram of a target facial patch according to an embodiment of the present disclosure. As shown in Figure 4, the audio data corresponds to a voice, and the audio content (voice content) is "一、二、开始!", where the audio content corresponding to the target audio frame Frame_1 is the text "一", the audio content corresponding to the target audio frame Frame_2 is the text "二", the audio content corresponding to the target audio frame Frame_3 is the text "开", and the audio content corresponding to the target audio frame Frame_4 is the text "始". For each target audio frame, a corresponding target facial patch is generated, that is, the target audio frame Frame_1 corresponds to the target facial patch P1, and the target facial patch P1 is the mouth shape of a real person when uttering the text "一". Similarly, the target audio frame Frame_2 corresponds to the target facial patch P2, which is the mouth shape of a real person when uttering the word "二", the target audio frame Frame_3 corresponds to the target facial patch P3, which is the mouth shape of a real person when uttering the word "开", and the target audio frame Frame_4 corresponds to the target facial patch P4, which is the mouth shape of a real person when uttering the word "始". In one possible implementation, the target facial patches corresponding to different target audio frames may be the same, for example, the target facial patch P1 is the same as the target facial patch P2.

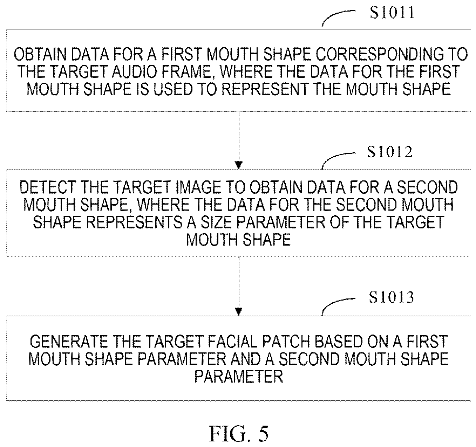

Further, in a possible implementation, as shown in FIG. 5, the specific implementation step of step S101 includes:

Step S1011: obtaining data for a first mouth shape corresponding to the target audio frame, where the data for the first mouth shape is used to represent a mouth shape.

Step S1012: detecting a target image to obtain data for a second mouth shape, where the data for the second mouth shape represents a size parameter of the target mouth shape.

Step S1013: generating a target facial patch based on a first mouth shape parameter and a second mouth shape parameter.

For example, in the terminal device or a cloud server supporting the operation of the server side, the data for the first mouth shape or the network model for generating the first mouth shape is predetermined, and the data for the first mouth shape is used to represent the mouth shape. More specifically, the data for the first mouth shape may be an image, an identification, or other descriptive information that may describe the mouth shape. For example, the data for the first mouth shape may be an image representing the mouth shape when the word "—" is uttered, the data for the first mouth shape may be an identification representing the mouth shape when the letter "A" is uttered, or the data for the first mouth shape may be descriptive information representing the mouth shape when the word "Apple" is uttered.

After the target audio frame is determined, in a possible implementation, the corresponding mouth shape data may be determined based on predetermined timing mapping information of the mouth shape. For example, the timing mapping information of the mouth shape represents the first data for the first mouth shape corresponding to each audio frame in the audio data. Each audio data corresponds to unique timing mapping information of a mouth shape, which may be generated in advance based on specific audio content of the audio data, and details will not be described here.

Further, since the purpose of generating the target facial patch is to simulate the mouth movements of a real user uttering a word, it is necessary to configure the size of the target facial patch so that the size of the target mouth shape matches the size of the mouth in the portrait in the target image. Specifically, the size of the mouth in the portrait in the target image is determined by detecting the target image, and then the corresponding data for the second mouth shape representing the size parameters of the target mouth shape is obtained based on the size of the portrait. For example, the target mouth shape includes a length parameter and a width parameter. After first detecting the facial sizes f1 and f2 of the portrait in the target image (where f1 represents the facial height and f2 represents the facial width), according to the predetermined (face-mouth) ratio coefficient, the length parameter c1 and the width parameter c2 that match the facial size are obtained based on the above f1 and f2.

Further, after rendering and processing based on the size parameters (the data for the second mouth shape) and the data representing the target mouth shape (the data for the first mouth shape), a target facial patch matching the target image can be obtained.

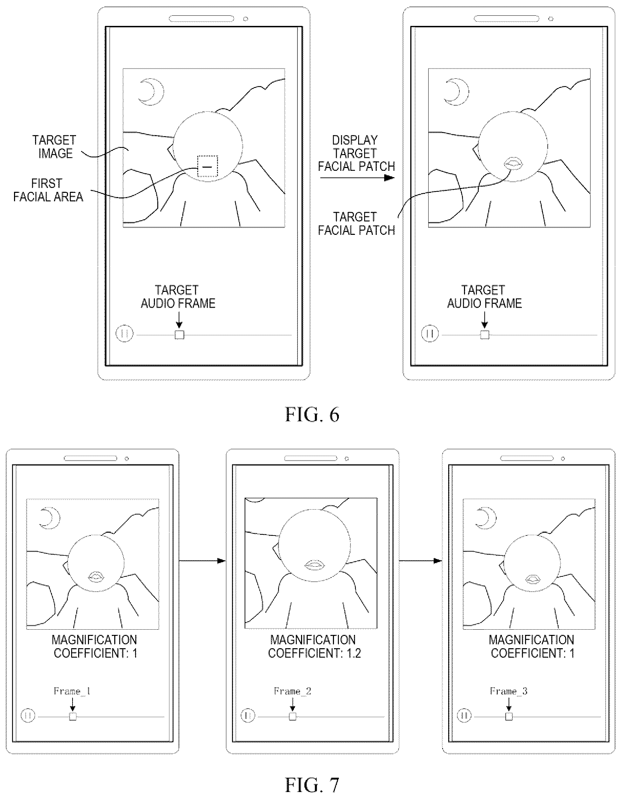

In step S102, the target facial patch is displayed in the first facial area of the target image, and the first facial area is used to present the change of the mouth shape as the audio data is played. As shown in Figure 6, when playing to the target audio frame, the corresponding target facial patch is displayed in the first facial area, and the original mouth shape in the target image is covered, thereby presenting the target mouth shape represented by the target facial patch, and the purpose of simulating the mouth movement of a real user when utteration is achieved.

For example, after obtaining the target facial patch, the target facial patch is displayed in the first facial area of the target image, where the target image, for example, includes a portrait part, and the first facial area may be a mouth region of a portrait face or a facial area including a mouth region. FIG. 6 is a schematic diagram of a process of displaying a target facial patch according to an embodiment of the present disclosure.

In a possible implementation, the target audio frame includes a first audio frame and a second audio frame, and the first audio frame and the second audio frame are alternately played. The specific implementation step of step S102 includes:

Step S1021: if the target audio frame is the first audio frame, displaying the target image and the target facial patch located in the first facial area based on a first magnification coefficient.

Step S1022: if the target audio frame is the second audio frame, displaying the target image and the target facial patch located in the first facial area based on a second magnification coefficient, where the first magnification coefficient is different from the second magnification coefficient.

For example, each target audio frame corresponds to a mouth movement. When different target audio frames are played in sequence, the mouth movement is switched and displayed. On this basis, in this embodiment, the target audio frame is divided into a first audio frame and a second audio frame. When the first audio frame and the second audio frame are played, different magnification coefficients are used to alternately magnify and display the target image and the target facial patch located in the first facial area, so that the target image displayed in the playback interface may present the effect of zooming in and zooming out according to the rhythm, thereby improving the visual expression of the target image. In one implementation, the first audio frame is an odd audio frame among all target audio frames of the audio data, and the second audio frame is an even audio frame among all target audio frames of the audio data. The first magnification coefficient and the second magnification coefficient may be a proportional coefficient based on the diagonal length of the target image, or a proportional factor based on the area of the target image. The first magnification coefficient and the second magnification coefficient are real numbers greater than 0. When greater than 1, they indicate that the size is enlarged; and when less than 1, they indicate that the size is reduced.

FIG. 7 is a schematic diagram of a process of alternately magnifying and displaying a target image according to an embodiment of the present disclosure. As shown in FIG. 7 , when the target audio frame is Frame_1, it is the first audio frame. In this case, the target image and the target facial patch located in the first facial area are displayed at 1 times with a magnification coefficient of 1 (the first magnification coefficient), that is, the target image and the target facial patch are displayed at the original size. When the target audio frame is Frame_2, it is the second audio frame. In this case, the target image and the target facial patch located in the first facial area are displayed at 1.2 times with a magnification coefficient of 1.2 (the second magnification coefficient). When the target audio frame is Frame_3, it is the first audio frame, and the implementation method is the same as that of Frame_1, which will not be repeated. In this embodiment, by presenting the first audio frame and the second audio frame with different magnification coefficients, the target image and the target facial patch present the effect of zooming in and zooming out according to the rhythm, thereby improving the visual expression of the target image.

In this embodiment, the target facial patch corresponding to the target audio frame is generated during playing the audio data, where the target facial patch is used to represent the target mouth shape, and the target mouth shape corresponds to the audio content of the target audio frame. The target facial patch is displayed in the first facial area of the target image, and the first facial area is used to present the changes of the mouth shape as the audio data is played. The target facial patch is used to simulate and display the target mouth shape corresponding to the currently played target audio content, so that the mouth shape displayed by the facial area of the target image may change with the change of the audio content, and the audio process corresponding to a real person singing audio data may be imitated, so that the audio work may present the effect of presenting video works, and the richness and diversity of the presented content of the audio work are improved.

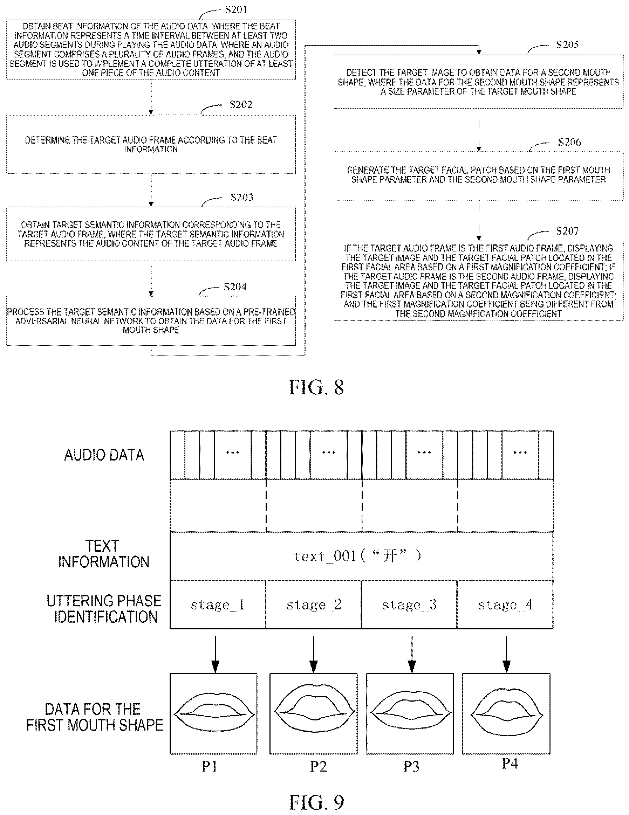

Referring to FIG. 8, FIG. 8 is a second schematic flowchart of a method for image processing according to an embodiment of the present disclosure. Based on the embodiment shown in FIG. 2, this embodiment further refines step S101 and a step of determining the target audio frame is added. The method for image processing according to this embodiment may be applied to the scenario where the content corresponding to the audio data is a song. The method for image processing includes:

Step S201: obtaining beat information of the audio data, where the beat information represents the time interval between at least two audio segments during playing the audio data, where an audio segment includes a plurality of audio frames, and the audio segment is used to implement a complete utteration of at least one piece of the audio content.

Step S202: determining the target audio frame according to the beat information.

For example, the beat information is information about the rhythm characteristics of the melody of the song corresponding to the audio data. More specifically, the beat information may be used to represent the speed of the melody of the song. For example, when the melody rhythm is fast, the audio segment interval is short, that is, the time interval between the audio content is short; conversely, when the melody rhythm is slow, the audio segment interval is long, that is, the time interval between the audio content is long, where the audio content is, for example, the lyrics in the song. In a possible implementation, the beat information may be a specific identification or number, which represents the length of a fixed time interval. For example, the beat information of 300ms (milliseconds) represents that the interval between two audio segments is 300ms. According to the beat information, the target audio frame is determined every 300ms in the audio data. The process of determining the target audio frame may be completed before playing the audio data or while playing the audio data, and may be configured as needed. Then, the corresponding target facial patch is generated and displayed based on the evenly distributed target audio frame, so that the mouth shape displayed in the first facial area in the target image may be dynamically changed according to a fixed period (300ms), where the beat information may be predetermined information corresponding to the audio data, and the acquisition of which will not be repeated.

In a possible implementation, the specific implementation of step S202 includes:

Step S2021: obtaining a number of beats per minute of the audio data according to the beat information, where the number of beats per minute represents the number of beats of the melody corresponding to the audio data in each minute.

Step S2022: determining the target audio frame based on the timestamp of the audio frame in the audio data and the number of beats per minute of the audio data.

For example, the number of beats per minute (BPM) refers to the number of sound beats emitted in a time of one minute. The melody corresponding to the audio data is with a fixed number of beats. For example, the number of beats per minute is 166 means that the number of beats of the melody corresponding to the audio data within one minute is 166, and the corresponding beat length is 60/166=361ms. In one possible implementation, before playing the audio data, based on the timestamp of the audio frame, starting from the timestamp of the audio frame corresponding to the first beat, the timestamp of all target audio frames in the audio data may be determined by accumulating the timestamps with the beat length as a fixed period. Then, all target audio frames may be obtained by recording based on the timestamp of the target audio frame. In another possible implementation, during playing the audio data, the timestamp of the current audio frame is obtained. If the timestamp of the current audio frame is an integer multiple of the timestamp of the audio frame of the first beat plus the beat length, the current audio frame is determined as the target audio frame, and the subsequent steps are performed synchronously to generate the target facial patch. The first beat can be configured based on user needs.

In another possible implementation, for audio data with a changing rhythm, the beat information includes a beat sequence. The beat sequence includes a plurality of beat nodes, each beat node indicates the timestamp of a target audio frame, that is, the beat sequence is a set of timestamps of each target audio frame, where the beat sequence may be predetermined by the user based on the content of the audio data. Based on the beat sequence, the target audio frames may be distributed unevenly. For example, the melody rhythm of the first half of the audio data is slow, including 50 target audio frames, while the melody rhythm of the second half of the audio data is blocky, including 100 target audio frames. That is, when the melody rhythm becomes blocky, the appearance density of the target audio frame also becomes higher, so that the update speed of the mouth shape in the target image is also accelerated. When the melody rhythm slows down, the appearance density of the target audio frame also becomes lower, so that the update speed of the mouth shape in the target image is also slowed down. In this way, the density of the target audio frame changes with the change of the melody rhythm, and then the change speed of the target facial patch displayed by the target image changes with the change of the melody rhythm, which is closer to the uttering process of a real user and the visual expression of the target image is improved.

In this embodiment, the target audio frame is matched with the melody rhythm of the audio data by obtaining the beat information corresponding to the audio data and determining the target audio frame based on the beat information. The change of the target facial patch generated subsequently is matched with the melody rhythm, thereby improving the visual performance of the target facial patch.

Step S203: obtaining target semantic information corresponding to the target audio frame, where the target semantic information represents audio content of the target audio frame.

Step S204: processing the target semantic information based on a pre-trained generative adversarial neural network (Generative Adversarial Nets, abbr. GAN) to obtain the data for the first mouth shape.

For example, after determining the target audio frame, the target semantic information corresponding to the target audio frame is obtained. The target voice information may be predetermined information stored in the audio data, and used to represent the type of audio content corresponding to the audio frame. For example, the target semantic information is #001, which represents the Chinese character "开", and the target semantic information is #002, which represents the Chinese character "始".

Then, the target semantic information is input into a pre-trained adversarial neural network, and the generation capability of the pre-trained adversarial neural network is used to generate corresponding uttering mouth shape images, identifications, descriptive information, etc., such as the mouth shape image when uttering the Chinese character "开". The adversarial neural network may be obtained by training with the uttering mouth shape images annotated with semantic information as training samples, and the specific training process will not be repeated here.

In a possible implementation, the target semantic information includes text information and corresponding uttering stage identification, where the text information represents a target text corresponding to the audio content of the target audio frame, and the uttering stage identification represents a target uttering stage of the target text corresponding to the target audio frame. Further, the specific implementation step of step S204 includes inputting the text information and the corresponding uttering stage identification into the adversarial neural network to obtain the data for the first mouth shape.

For example, the actual uttering process of a real person is a continuous process, and the mouth shape changes continuously during the uttering process. Therefore, if the process needs to be more accurately represented, a plurality of frames of the facial patch are required for representation. Specifically, the target semantic information includes text information and a corresponding uttering stage identification. For example, the target semantic information is an array, which includes a first field representing the text information and a second field representing the uttering stage identification, where the content of the first field is "GB2312", representing the Chinese character"; the content of the second field is "stage_1", representing the mouth shape of the first uttering stage of the Chinese character "开". Then, the text information and the corresponding uttering stage identification are input to the adversarial neural network and the data for the first mouth shape that matches the Chinese character "开" (text information) and the "mouth shape of the first uttering stage" (uttering stage identification) may be obtained.

The target text corresponds to a plurality of uttering stages. FIG. 9 is a schematic diagram of a corresponding relationship between an uttering stage and the data for the first mouth shape according to an embodiment of the present disclosure. In this embodiment, the data for the first mouth shape is an image representing a mouth shape. Referring to FIG. 9, for the same text information (text_001), for example, that represents the Chinese character "开", when the uttering stage identification corresponding to the target audio frame is stage_1, the first data for the first mouth shape corresponding to the uttering stage generated by the adversarial neural network is P1; when the uttering stage identification corresponding to the target audio frame is stage_2, the first data for the first mouth shape corresponding to the uttering stage generated by the adversarial neural network is P2; similarly, when the uttering stage identification corresponding to the target audio frame is stage_3 and stage_4, the first data for the first mouth shape corresponding to the uttering stages generated by the adversarial neural network is P3 and P4.

In this embodiment, by obtaining the text information and the corresponding uttering stage identification corresponding to the target audio frame, the corresponding information of the first mouth shape is generated based on the text information and the corresponding uttering stage identification, which further refines the difference in mouth shapes at different uttering stages during utteration, and improves the precision of the mouth shape change presented by the first facial area of the target image, and improves the visual expression.

Step S205: detecting the target image to obtain the data for the second shape, where the data for the second shape represents a size parameter of the target mouth shape.

For example, the specific implementation step of step S205 includes:

Step S2051: performing mouth feature recognition based on the target image to obtain contour key points, where the contour key points are used to represent a length and a width of a mouth contour in the target image.

Step S2052: obtaining the data for the second mouth shape based on the coordinates of the contour key points.

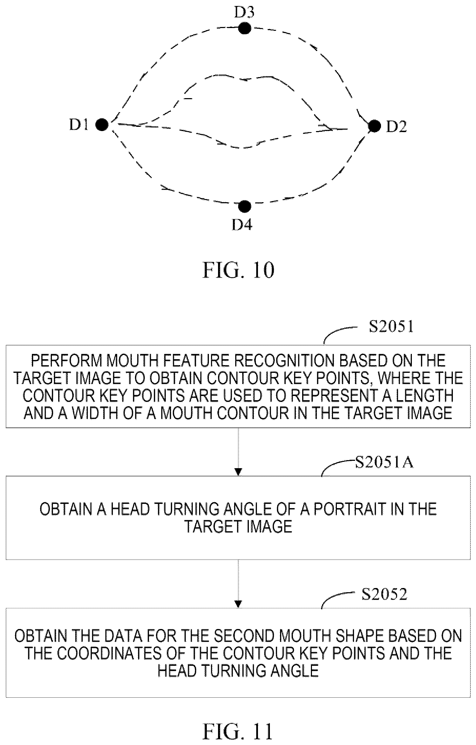

FIG. 10 is a schematic diagram of contour key points according to an embodiment of the present disclosure, and the above steps are described below with reference to FIG. 10. For example, after the target image is obtained, the mouth feature recognition is performed on the portrait portion in the target image to obtain contour key points therein, where as shown in the figure, for example, the contour key points may include a leftmost end point D1 of the mouth contour, a rightmost end point D2 of the mouth contour, and an uppermost end point D3 of the mouth contour and a lowermost end point D4 of the mouth contour. Then, based on the coordinates of the contour key points, the data for the second mouth shape is obtained, where for example, the data for the second mouth shape represents the length value and width value of the mouth shape, or the width-to-length ratio of the mouth shape.

FIG. 11 is a possible implementation of step S205, as shown in FIG. 11, optionally, after step S2051, the method further includes:

Step S2051A: obtaining a head turning angle of the portrait in the target image.

Correspondingly, after the step S2051A is performed, the specific implementation of step S2052 is: obtaining the data for the second mouth shape based on the coordinates of the contour key points and the head turning angle.

For example, the head turning angle is the angle between the plane where the face of the person in the target image is located and the screen plane, and the head turning angle may also be obtained by performing view detection on the target image. The specific implementation is the existing technology and will not be repeated here. After obtaining the head turning angle, the data for the second mouth shape is calculated based on the coordinates of the contour key points and the head turning angle, and the specific implementation is as shown in Formula (1):

$$mouthDis = \frac{|D3.y - D4.y|}{|D1.x - D2.x| \times cos(yaw)} \qquad (1)$$

where *mouthDis* is the data for the second mouth shape, representing the width-to-length ratio of the mouth shape, $D3.y$ is the vertical coordinate of the contour key point D3, $D4.y$ is the vertical coordinate of the contour key point D4, $D1.x$ is the horizontal coordinate of the contour key point D1 and $D2.x$ is the horizontal coordinate of the contour key point D2, with *yaw* the being the head turning angle .

Step S206: generating a target facial patch based on the first mouth shape parameter and the second mouth shape parameter.

Step S207: if the target audio frame is the first audio frame, displaying the target image and the target facial patch located in the first facial area based on the first magnification coefficient; and if the target audio frame is the second audio frame, displaying the target image and the target facial patch located in the first facial area based on the second magnification coefficient, where the first magnification coefficient is different from the second magnification coefficient.

For example, after obtaining the first mouth shape parameter and the second mouth shape parameter, the first mouth shape parameter and the second mouth shape parameter are processed or rendered as input quantities to generate the corresponding target facial patch. Then, the result of image detection on the target image is determined, and the position of the first facial area (such as the mouth area) in the target image is determined, and the target mouth shape in the target facial patch is aligned with the mouth area in the target image and rendered, so that the target facial patch may be covered and displayed in the target image, so as to achieve the imitation of the mouth shape of the utterance of a real person.

Further, based on the type of the target audio frame, for the first audio frame and the second audio frame, a second magnification is performed on the first audio frame and the second audio frame using different magnification coefficients, so that the target image and the target facial patch present a lens zoom-in and zoom-out effect according to the rhythm, thereby improving the visual expression of the target image. The specific implementation process can be found in the relevant description of the embodiment corresponding to FIG. 7, which will not be repeated here.

It should be noted that, in this embodiment, the target audio frame (including the first audio frame and the second audio frame) is determined based on the beat information, so that the density of the target audio frame may change with the change of the melody rhythm. This solution can not only change the target facial patch (mouth shape) with the melody rhythm, but also change the current lens zoom-in and zoom-out effects (i.e. the frequency of the lens zoom-in and zoom-in) with the melody rhythm during alternately enlarging and presenting the first audio frame and the second audio frame to present the lens zoom-in and zoom-out effects, thereby improving the visual expression of the target image.

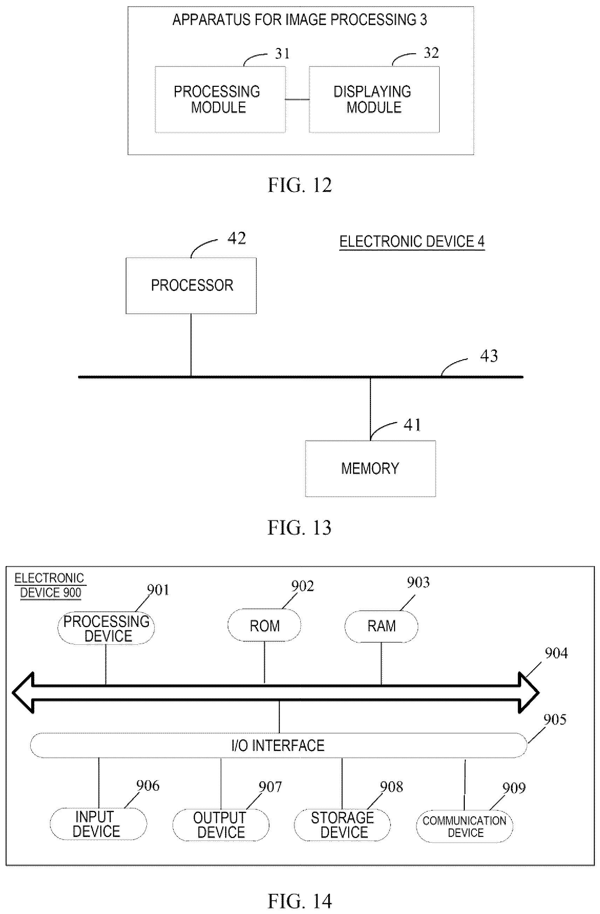

Corresponding to the method for image processing in the above embodiment, FIG. 12 is a structural block diagram of an apparatus for image processing according to an embodiment of the present disclosure. For ease of illustration, only portions related to embodiments of the present disclosure are shown. Referring to FIG. 8, the apparatus for image processing 3 includes:

> a processing module 31, configured to generate, during playing audio data, a target facial patch corresponding to a target audio frame, where the target facial patch is used to represent a target mouth shape, and the target mouth shape corresponds to audio content of the target audio frame.
> a display module 32, configured to display the target facial patch in a first facial area of a target image, where the first facial area is used to present a change of a mouth shape as the audio data is played.

In an embodiment of the present disclosure, the target audio frame includes a first audio frame and a second audio frame, and the first audio frame and the second audio frame are alternately played; the display module 32 is specifically configured to: if the target audio frame is the first audio frame, display the target image and a target facial patch located in the first facial area based on a first magnification coefficient; and if the target audio frame is the second audio frame, display the target image and a target facial patch located in the first facial area based on a second magnification coefficient, where the first magnification coefficient is different from the second magnification coefficient.

In an embodiment of the present disclosure, when generating the target facial patch corresponding to the target audio frame, the processing module 31 is specifically configured to: obtain data for a first mouth shape corresponding to the target audio frame, where the data for the first mouth shape is used to represent a mouth shape; detect the target image to obtain data for a second mouth shape, where the data for the second mouth shape represents a size parameter of the target mouth shape; and generate the target facial patch based on the first mouth shape parameter and the second mouth shape parameter.

In an embodiment of the present disclosure, when obtaining the data for the first mouth shape corresponding to the target audio frame, the processing module 31 is specifically configured to: obtain target semantic information corresponding to the target audio frame, where the target semantic information represents the audio content of the target audio frame; and process the target semantic information based on a pre-trained adversarial neural network to obtain the data for the first mouth shape.

In an embodiment of the present disclosure, the target semantic information includes text information and corresponding uttering stage identification, where the text information represents a target text corresponding to the audio content of the target audio frame, and the uttering stage identification represents a target uttering stage of the target audio frame corresponding to the target text; and when processing the target semantic information based on a pre-trained adversarial neural network to obtain the data for the first mouth shape, the processing module 31 is specifically configured to input the text information and the corresponding uttering stage identification into the adversarial neural network to obtain the data for the first mouth shape.

In an embodiment of the present disclosure, when detecting the target image, the processing module 31 is specifically configured to: perform mouth feature recognition based on the target image to obtain contour key points, where the contour key points are used to represent a length and a width of a mouth contour in the target image; and obtain the data for the second mouth shape based on the coordinates of the contour key points.

In an embodiment of the present disclosure, the processing module 31 is further configured to: obtain a head turning angle of a portrait in the target image; and when obtaining the data for the second mouth shape based on the coordinates of the contour key points, the processing module 31 is specifically configured to obtain the data for the second mouth shape based on the coordinates of the contour key points and the head turning angle.

In an embodiment of the present disclosure, before generating the target facial patch corresponding to the target audio frame, the processing module 31 is further configured to: obtain beat information of the audio data, where the beat information represents a time interval between at least two audio segments during playing the audio data, where an audio segment includes a plurality of audio frames, and the audio segment is used to implement complete uttering of at least one piece of audio content; and determine the target audio frame based on the beat information.

In an embodiment of the present disclosure, when determining the target audio frame according to the beat information, the processing module 31 is specifically configured to: obtain a number of beats per minute of the audio data according to the beat information, where the number of beats per minute represents the number of beats of a melody corresponding to the audio data in each minute; and determine the target audio frame based on a timestamp of an audio frame in the audio data and the number of beats per minute of the audio data.

The processing module 31 is connected to the display module 32. The apparatus for image processing 3 provided in this embodiment may perform the technical solutions of the above method embodiments, and the implementation principles and technical effects thereof are similar, which will not be described here again in this embodiment.

FIG. 13 is a schematic structural diagram of an electronic device according to an embodiment of the present disclosure. As shown in FIG. 13 , the electronic device 4 includes:

a processor 41, and a memory 42 communicatively connected to the processor 41;
the memory 42 stores computer executable instructions.
the processor 41 executes the computer executable instruction stored in the memory 42 to implement the method for image processing in the embodiments shown in FIG. 2 to FIG. 11.

Optionally, the processor 41 and the memory 42 are connected by a bus 43.

Related descriptions may be understood with reference to related descriptions and effects corresponding to the steps in the embodiments corresponding to FIG. 2 to FIG. 11, and details are not described herein again.

FIG. 14 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 14 is merely an example, and should not impose any limitation on the functions and scope of use of the embodiments of the present disclosure.

As shown in FIG. 14, the electronic device 900 may include a processing device (for example, a central processing unit, a graphics processor, etc.) 901, which may perform various appropriate actions and processing according to a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. An input / output (I / O) interface 905 is also connected to the bus 904.

Generally, the following devices may be connected to the I / O interface 905: an input device 906 including, for example, a touch screen, a touch pad, a keyboard, a mouse, a camera, a microphone, an accelerometer, a gyroscope, etc. ; an output device 907 including, for example, a liquid crystal display (LCD), a speaker, a vibrator, etc. ; a storage device 908 including, for example, a magnetic tape, a hard disk, etc. ; and a communication device 909. The communication device 909 may allow the electronic device 900 to communicate wirelessly or wired with other devices to exchange data. While FIG. 14 shows an electronic device 900 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 909, or installed from the storage device 908, or from the ROM 902. When the computer program is executed by the processing apparatus 901, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of the computer-readable storage medium may include, but are not limited to, an electrical connection having one or more wires, a portable computer diskette, a hard disk, a RAM, a ROM, an erasable programmable read-only memory (EPROM) or a flash memory, an optical fiber, a portable compact disk read-only memory (CD-ROM), an optical storage device, a magnetic storage device, or any suitable combination thereof. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted by any suitable medium, including but not limited to: wires, optical cables, radio frequency (RF for short), and the like, or any suitable combination thereof.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C++, and conventional procedural programming languages, such as the "C" language or similar programming languages. The program code may execute entirely on a user computer, partially on a user computer, as a standalone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and / or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, the exemplary types of hardware logic components that may be used include: a field programmable gate array (FPGA), an application specific integrated circuit (ASIC for short), an application specific standard (ASSP), a system on chip (SoC for short), a complex programmable logic device (Complex Programmable Logic Device, CPLD for short), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer diskettes, hard disks, RAMs, ROMs, EPROMs or flash memories, optical fibers, CD-ROMs, optical storage devices, magnetic storage devices, or any suitable combination of the foregoing.

According to a first aspect, a method for image processing is provided according to one or more embodiments of the present disclosure, including:
generating, during playing audio data, a target facial patch corresponding to a target audio frame, where the target facial patch is used to represent a target mouth shape, and the target mouth shape corresponds to audio content of the target audio frame; and displaying the target facial patch in a first facial area of a target image, where the first facial area is used to present a change of a mouth shape as the audio data is played.

According to one or more embodiments of the present disclosure, the target audio frame includes a first audio frame and a second audio frame, and the first audio frame and the second audio frame are alternately played; the displaying the target facial patch in the first facial area of the target image includes: if the target audio frame is the first audio frame, displaying the target image and the target facial patch located in the first facial area based on a first magnification coefficient; and if the target audio frame is the second audio frame, displaying the target image and the target facial patch located in the first facial area based on a second magnification coefficient, where the first magnification coefficient is different from the second magnification coefficient.

According to one or more embodiments of the present disclosure, the generating the target facial patch corresponding to the target audio frame includes: obtaining data for a first mouth shape corresponding to the target audio frame, where the data for the first mouth shape is used to represent the mouth shape; detecting the target image to obtain data for a second mouth shape, where the data for the second mouth shape represents a size parameter of the target mouth shape; and generating the target facial patch based on the first mouth shape parameter and the second mouth shape parameter.

According to one or more embodiments of the present disclosure, the obtaining the data for the first mouth shape corresponding to the target audio frame includes: obtaining target semantic information corresponding to the target audio frame, where the target semantic information represents the audio content of the target audio frame; and processing the target semantic information based on a pre-trained adversarial neural network to obtain the data for the first mouth shape.

According to one or more embodiments of the present disclosure, the target semantic information includes text information and a corresponding uttering stage identification, where the text information represents a target text corresponding to the audio content of the target audio frame, and the uttering stage identification represents a target uttering stage of the target audio frame corresponding to the target text; the processing the target semantic information based on the pre-trained adversarial neural network to obtain the data for the first mouth shape includes: inputting the text information and the corresponding uttering stage identification into the adversarial neural network to obtain the data for the first mouth shape.

According to one or more embodiments of the present disclosure, the detecting the target image to obtain the data for the second mouth shape includes: performing mouth feature recognition based on the target image to obtain contour key points, where the contour key points are used to represent a length and a width of a mouth contour in the target image; and obtaining the data for the second mouth shape based on the coordinates of the contour key points.

According to one or more embodiments of the present disclosure, the method further includes: obtaining a head turning angle of a portrait in the target image; the obtaining the data for the second mouth shape based on the coordinates of the contour key point includes: obtaining the data for the second mouth shape based on the coordinates of the contour key points and the head turning angle.

According to one or more embodiments of the present disclosure, before generating the target facial patch corresponding to the target audio frame, the method further includes: obtaining beat information of the audio data, where the beat information represents a time interval between at least two audio segments during playing the audio data ,where an audio segment includes a plurality of audio frames, and the audio segment is used to complete a complete uttering of at least one piece of the audio content; and determining the target audio frame based on the beat information.

According to one or more embodiments of the present disclosure, the determining the target audio frame according to the beat information includes: obtaining a number of beats per minute of the audio data according to the beat information, where the number of beats per minute representing the number of beats of a melody corresponding to the audio data in each minute; and determining the target audio frame based on a timestamp of an audio frame in the audio data and the number of beats of per minute of the audio data.

According to a second aspect, an apparatus for image processing is provided according to one or more embodiments of the present disclosure, including:

a processing module, configured to generate, during playing audio data, a target facial patch corresponding to a target audio frame, where the target facial patch is used to represent a target mouth shape, and the target mouth shape corresponds to audio content of the target audio frame.

a display module, configured to display the target facial patch in a first facial area of a target image, where the first facial area is used to present a change of a mouth shape as the audio data is played.

According to one or more embodiments of the present disclosure, the target audio frame includes a first audio frame and a second audio frame, and the first audio frame and the second audio frame are alternately played; the display module is specifically configured to: if the target audio frame is the first audio frame, display the target image and the target facial patch located in the first facial area based on a first magnification coefficient; and if the target audio frame is the second audio frame, display the target image and the target facial patch located in the first facial area based on a second magnification coefficient, where the first magnification coefficient is different from the second magnification coefficient.

According to one or more embodiments of the present disclosure, when generating the target facial patch corresponding to the target audio frame, the processing module is specifically configured to: obtain data for a first mouth shape corresponding to the target audio frame, where the data for the first mouth shape is used to represent the mouth shape; detect the target image to obtain data for a second mouth shape, where the data for the second mouth shape represents a size parameter of the target mouth shape; and generate the target facial patch based on the first mouth shape parameter and the second mouth shape parameter.

According to one or more embodiments of the present disclosure, when obtaining the data for the first mouth shape corresponding to the target audio frame, the processing module is specifically configured to: obtain target semantic information corresponding to the target audio frame, where the target semantic information represents the audio content of the target audio frame; and process the target semantic information based on a pre-trained adversarial neural network to obtain the data for the first mouth shape.

According to one or more embodiments of the present disclosure, the target semantic information includes text information and corresponding uttering stage identification, where the text information represents a target text corresponding to the audio content of the target audio frame, and the uttering stage identification represents a target uttering stage of the target audio frame corresponding to the target text; and when processing the target semantic information based on the pre-trained adversarial neural network to obtain the data for the first mouth shape, the processing module is specifically configured to input the text information and the corresponding uttering stage identification into the adversarial neural network to obtain the data for the first mouth shape.

According to one or more embodiments of the present disclosure, when detecting the target image, the processing module is specifically configured to: perform mouth feature recognition based on the target image to obtain contour key points, where the contour key points are used to represent a length and a width of a mouth contour in the target image; and obtain the data for the second mouth shape based on the coordinates of the contour key points.

According to one or more embodiments of the present disclosure, the processing module is further configured to: obtain a head turning angle of a portrait in the target image; and when obtaining the data for the second mouth shape based on the coordinates of the contour key point, the processing module is specifically configured to obtain the data for the second mouth shape based on the coordinates of the contour key point and the head turning angle.

According to one or more embodiments of the present disclosure, before generating the target facial patch corresponding to the target audio frame, the processing module is further configured to: obtain beat information of the audio data, where the beat information represents a time interval between at least two audio segments in the process playing the audio data, where an audio segment includes a plurality of audio frames, and the audio segment is used to implement a complete utteration of at least one piece of the audio content; and determine the target audio frame based on the beat information.

According to one or more embodiments of the present disclosure, when determining the target audio frame according to the beat information, the processing module is specifically configured to: obtain a number of beats per minute of the audio data according to the beat information, where the number of beats per minute represents the number of beats of a melody corresponding to the audio data in each minute; and determine the target audio frame based on a timestamp of an audio frame in the audio data and the number of beats per minute of the audio data.

According to a third aspect, an electronic device is provided according to one or more embodiments of the present disclosure, including: a processor, and a memory communicatively connected to the processor;

the memory stores computer executable instructions;
the processor executes the computer executable instruction stored in the memory to implement the method for image processing according to the first aspect and various possible designs of the first aspect.

According to a fourth aspect, a computer-readable storage medium is provided according to one or more embodiments of the present disclosure, where the computer-readable storage medium stores computer-executable instructions, and when the processor executes the computer-executable instruction, the method for image processing according to the first aspect and the possible designs of the first aspect is implemented.

According to a fifth aspect, an embodiment of the present disclosure provides a computer program product, including a computer program, where the computer program, when executed by a processor, implements the method for image processing according to the first aspect and various possible designs of the first aspect.

According to a sixth aspect, an embodiment of the present disclosure provides a computer program, where the computer program, when executed by a processor, implements the method for image processing according to the first aspect and various possible designs of the first aspect.

According to the method for image processing and device, the electronic device, the computer readable storage medium, the computer program product and the computer program provided by the embodiment, during playing the audio data, a target facial patch corresponding to a target audio frame is generated, the target facial patch is used for representing a target mouth shape, and the target mouth shape corresponds to audio content of the target audio frame; and the target facial patch is displayed in a first facial area of the target image, and the first facial area is used to present the change of the mouth shape as the audio data is played. The target facial patch is used to simulate and display the target mouth shape corresponding to the currently played target audio content, so that the mouth shape displayed in the facial area of the target image may change with the change of the audio content, which may imitate the audio process corresponding to the audio data of a real people singing, so that the audio works may present the display effect of video works, and improve the richness and diversity of the display content of audio works.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and / or methodological acts, it is to be understood that the subject matter defined in the appended claims is not necessarily limited to the specific features or acts described above. Rather, the specific features and acts described above are merely exemplary forms of implementing the claims.

**Claims**

1. A method for image processing, comprising:

    generating, during playing audio data, a target facial patch corresponding to a target audio frame, wherein the target facial patch is used to represent a target mouth shape, and the target mouth shape corresponds to audio content of the target audio frame; and
    displaying the target facial patch in a first facial area of a target image, wherein the first facial area is used to present a change of a mouth shape as the audio data is played.

2. The method of claim 1, wherein the target audio frame comprises a first audio frame and a second audio frame, and the first audio frame and the second audio frame are alternately played,
   displaying the target facial patch in the first facial area of the target image comprising:

    if the target audio frame is the first audio frame, displaying the target image and the target facial patch located in the first facial area based on a first magnification coefficient; and
    if the target audio frame is the second audio frame, displaying the target image and the target facial patch located in the first facial area based on a second magnification coefficient;
    the first magnification coefficient being different from the second magnification coefficient.

3. The method of claim 1 or 2, wherein generating the target facial patch corresponding to the target audio frame comprises:

    obtaining data for a first mouth shape corresponding to the target audio frame, wherein the data for the first mouth shape is used to represent the mouth shape;
    detecting the target image to obtain data for a second mouth shape, wherein the data for the second mouth shape represents a size parameter of the target mouth shape; and
    generating the target facial patch based on the first mouth shape parameter and the second mouth shape

14

parameter.

4. The method of claim 3, wherein obtaining the data for the first mouth shape corresponding to the target audio frame comprises:

   obtaining target semantic information corresponding to the target audio frame, wherein the target semantic information represents the audio content of the target audio frame; and
   processing the target semantic information based on a pre-trained adversarial neural network to obtain the data for the first mouth shape.

5. The method of claim 4, wherein the target semantic information comprises text information and corresponding uttering stage identification, wherein the text information represents a target text corresponding to the audio content of the target audio frame, and the uttering stage identification represents a target uttering stage of the target audio frame corresponding to the target text; and
   processing the target semantic information based on the pre-trained adversarial neural network to obtain the data for the first mouth shape comprises:
   inputting the text information and the corresponding uttering stage identification into the adversarial neural network to obtain the data for the first mouth shape.

6. The method of any one of claim 3 to 5, wherein detecting the target image to obtain the data for the second mouth shape comprises:

   performing mouth feature recognition based on the target image to obtain contour key points, wherein the contour key points are used to represent a length and a width of a mouth contour in the target image; and
   obtaining the data for the second mouth shape based on coordinates of the contour key points.

7. The method of claim 6, wherein the method further comprises:

   obtaining a head turning angle of a portrait in the target image; and
   the obtaining the data for the second mouth shape based on the coordinates of the contour key points comprises:
   obtaining the data for the second mouth shape based on the coordinates of the contour key points and the head turning angle.

8. The method of any one of claims 1 to 7, wherein before generating the target facial patch corresponding to the target audio frame, the method further comprises:

   obtaining beat information of the audio data, wherein the beat information represents a time interval between at least two audio segments during playing the audio data, wherein an audio segment comprises a plurality of audio frames, and the audio segment is used to implement a complete utteration of at least one piece of the audio content; and
   determining the target audio frame according to the beat information.

9. The method of claim 8, wherein the determining the target audio frame according to the beat information comprises:

   obtaining a number of beats per minute of the audio data according to the beat information, wherein the number of beats per minute represents the number of beats of a melody corresponding to the audio data in each minute; and
   determining the target audio frame based on a timestamp of an audio frame in the audio data and the number of beats per minute of the audio data.

10. An apparatus for image processing, comprising:

    a processing module, configured to generate, during playing audio data, a target facial patch corresponding to a target audio frame, wherein the target facial patch is used to represent a target mouth shape, and the target mouth shape corresponds to audio content of the target audio frame; and
    a display module, configured to display the target facial patch in a first facial area of a target image, wherein the first facial area is used to present a change of a mouth shape as the audio data is played.

11. An electronic device, comprising: a processor, and a memory communicatively connected to the processor;

the memory stores computer executable instructions;

the processor executes the computer-executable instructions stored in the memory to implement the method for image processing of any of claims 1 to 9.

12. A computer-readable storage medium storing computer-executable instructions, wherein when the computer-executable instructions executed by a processor, implement the method for image processing according to any of claims 1 to 9

13. A computer program product, comprising a computer program, wherein the computer program, when executed by a processor, implements the method for image processing according to any of claims 1 to 9.

14. A computer program, wherein the computer program, when executed by a processor, implements the method for image processing according to any of claims 1 to 9.

PLAYBACK
INTERFACE

TARGET
IMAGE

FIG. 1

S101

GENERATE, DURING PLAYING AUDIO DATA, A TARGET FACIAL
PATCH CORRESPONDING TO A TARGET AUDIO FRAME, WHERE
THE TARGET FACIAL PATCH IS USED TO REPRESENT A TARGET
MOUTH SHAPE, AND THE TARGET MOUTH SHAPE CORRESPONDS
TO AUDIO CONTENT OF THE TARGET AUDIO FRAME

S102

DISPLAY THE TARGET FACIAL PATCH IN A FIRST FACIAL AREA OF
A TARGET IMAGE, WHERE THE FIRST FACIAL AREA IS USED TO
PRESENT A CHANGE OF A MOUTH SHAPE AS THE AUDIO DATA IS
PLAYED

FIG. 2

AUDIO
FRAME

AUDIO DATA

| | | ... | | | | ... | ... | ... | | ... |

AUDIO
SEGMENT D1 | AUDIO
SEGMENT D2 | AUDIO
SEGMENT D3 | AUDIO
SEGMENT D4

AUDIO
CONTENT

| 一 | | 二 | | 开 | 始 |

FIG. 3

Frame_1          Frame_2          Frame_3    Frame_4

AUDIO DATA

| | | ... | | | | ... | ... | ... | | ... |

AUDIO
CONTENT

| 一 | | 二 | | 开 | 始 |

TARGET
FACIAL
PATCH

P1          P2          P3          P4

FIG. 4

S1011

OBTAIN DATA FOR A FIRST MOUTH SHAPE CORRESPONDING TO THE TARGET AUDIO FRAME, WHERE THE DATA FOR THE FIRST MOUTH SHAPE IS USED TO REPRESENT THE MOUTH SHAPE

S1012

DETECT THE TARGET IMAGE TO OBTAIN DATA FOR A SECOND MOUTH SHAPE, WHERE THE DATA FOR THE SECOND MOUTH SHAPE REPRESENTS A SIZE PARAMETER OF THE TARGET MOUTH SHAPE

S1013

GENERATE THE TARGET FACIAL PATCH BASED ON A FIRST MOUTH SHAPE PARAMETER AND A SECOND MOUTH SHAPE PARAMETER

FIG. 5

TARGET
IMAGE

FIRST
FACIAL AREA

DISPLAY
TARGET
FACIAL PATCH

TARGET
FACIAL PATCH

TARGET
AUDIO FRAME

TARGET
AUDIO FRAME

FIG. 6

MAGNIFICATION
COEFFICIENT: 1

Frame_1

MAGNIFICATION
COEFFICIENT: 1.2

Frame_2

MAGNIFICATION
COEFFICIENT: 1

Frame_3

FIG. 7

S201

OBTAIN BEAT INFORMATION OF THE AUDIO DATA, WHERE THE BEAT INFORMATION REPRESENTS A TIME INTERVAL BETWEEN AT LEAST TWO AUDIO SEGMENTS DURING PLAYING THE AUDIO DATA, WHERE AN AUDIO SEGMENT COMPRISES A PLURALITY OF AUDIO FRAMES, AND THE AUDIO SEGMENT IS USED TO IMPLEMENT A COMPLETE UTTERATION OF AT LEAST ONE PIECE OF THE AUDIO CONTENT

S205

DETECT THE TARGET IMAGE TO OBTAIN DATA FOR A SECOND MOUTH SHAPE, WHERE THE DATA FOR THE SECOND MOUTH SHAPE REPRESENTS A SIZE PARAMETER OF THE TARGET MOUTH SHAPE

S202

DETERMINE THE TARGET AUDIO FRAME ACCORDING TO THE BEAT INFORMATION

S206

GENERATE THE TARGET FACIAL PATCH BASED ON THE FIRST MOUTH SHAPE PARAMETER AND THE SECOND MOUTH SHAPE PARAMETER

S203

OBTAIN TARGET SEMANTIC INFORMATION CORRESPONDING TO THE TARGET AUDIO FRAME, WHERE THE TARGET SEMANTIC INFORMATION REPRESENTS THE AUDIO CONTENT OF THE TARGET AUDIO FRAME

S207

IF THE TARGET AUDIO FRAME IS THE FIRST AUDIO FRAME, DISPLAYING THE TARGET IMAGE AND THE TARGET FACIAL PATCH LOCATED IN THE FIRST FACIAL AREA BASED ON A FIRST MAGNIFICATION COEFFICIENT; IF THE TARGET AUDIO FRAME IS THE SECOND AUDIO FRAME, DISPLAYING THE TARGET IMAGE AND THE TARGET FACIAL PATCH LOCATED IN THE FIRST FACIAL AREA BASED ON A SECOND MAGNIFICATION COEFFICIENT; AND THE FIRST MAGNIFICATION COEFFICIENT BEING DIFFERENT FROM THE SECOND MAGNIFICATION COEFFICIENT

S204

PROCESS THE TARGET SEMANTIC INFORMATION BASED ON A PRE-TRAINED ADVERSARIAL NEURAL NETWORK TO OBTAIN THE DATA FOR THE FIRST MOUTH SHAPE

FIG. 8

AUDIO DATA    · · ·    · · ·    · · ·    · · ·

TEXT INFORMATION    text_001（ "开" ）

UTTERING PHASE IDENTIFICATION    stage_1    stage_2    stage_3    stage_4

DATA FOR THE FIRST MOUTH SHAPE

P1    P2    P3    P4

FIG. 9

D3

D1 ● ● D2

D4

FIG. 10

S2051

PERFORM MOUTH FEATURE RECOGNITION BASED ON THE TARGET IMAGE TO OBTAIN CONTOUR KEY POINTS, WHERE THE CONTOUR KEY POINTS ARE USED TO REPRESENT A LENGTH AND A WIDTH OF A MOUTH CONTOUR IN THE TARGET IMAGE

S2051A

OBTAIN A HEAD TURNING ANGLE OF A PORTRAIT IN THE TARGET IMAGE

S2052

OBTAIN THE DATA FOR THE SECOND MOUTH SHAPE BASED ON THE COORDINATES OF THE CONTOUR KEY POINTS AND THE HEAD TURNING ANGLE

FIG. 11

APPARATUS FOR IMAGE PROCESSING 3

⌐ 31

PROCESSING
MODULE

⌐ 32

DISPLAYING
MODULE

FIG. 12

⌐ 42

PROCESSOR

ELECTRONIC DEVICE 4

⌐ 43

⌐ 41

MEMORY

FIG. 13

ELECTRONIC
DEVICE 900

901
PROCESSING
DEVICE

902
ROM

903
RAM

904

905

I/O INTERFACE

906
INPUT
DEVICE

907
OUTPUT
DEVICE

908
STORAGE
DEVICE

909
COMMUNICATION
DEVICE

FIG. 14

## INTERNATIONAL SEARCH REPORT

| International application No. |
| --- |
| **PCT/CN2023/120412** |

| A. | CLASSIFICATION OF SUBJECT MATTER |
| --- | --- |

G06T 11/20(2006.01)i;  G06F 3/16(2006.01)i

According to International Patent Classification (IPC) or to both national classification and IPC

| B. | FIELDS SEARCHED |
| --- | --- |

Minimum documentation searched (classification system followed by classification symbols)

IPC:  G06T G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 音频帧, 嘴部, 脸, audio frame, mouth, face

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115619897 A (BEIJING BYTEDANCE NETWORK TECHNOLOGY CO., LTD.) 17 January 2023 (2023-01-17)<br>claims 1-13, and description, paragraphs [0004]-[0150] | 1-14 |
| X | CN 113886643 A (SHENZHEN ZHUIYI TECHNOLOGY CO., LTD.) 04 January 2022 (2022-01-04)<br>description, paragraphs [0002]-[0247] | 1-14 |
| A | CN 113987269 A (SHENZHEN ZHUIYI TECHNOLOGY CO., LTD.) 28 January 2022 (2022-01-28)<br>entire document | 1-14 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **18 October 2023** | **23 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/120412** |

| Patent document cited in search report | | | Publication date (day/month/year) | Patent family member(s) | Publication date (day/month/year) |
| --- | --- | --- | --- | --- | --- |
| CN | 115619897 | A | 17 January 2023 | None | |
| CN | 113886643 | A | 04 January 2022 | None | |
| CN | 113987269 | A | 28 January 2022 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211262215